# EUROPEAN PATENT APPLICATION

(11) **EP 3 045 046 A1**
(43) Date of publication of application: **20.07.2016**
(21) Application number: 14841132.5
(22) Date of filing: 26.05.2014
(51) Int. Cl.: A23B 7/10, A23L 19/20

(54) **METHOD FOR QUICKLY SALTING KIMCHI INGREDIENTS, AND METHOD AND SYSTEM FOR QUICKLY PREPARING LOW-SALT KIMCHI**

(30) Priority: 29.08.2013 KR 20130103237; 30.10.2013 KR 20130130077; 06.01.2014 KR 20140001113
(71) Applicant: Elab Inc., Daejeon 305-509 (KR)
(72) Inventor: KIM, Kwang Young, Daejeon 305-744 (KR); HWANG, Yong Soo, Daejeon 305-761 (KR); KIM, Seon Mi, Daejeon 305-761 (KR); BAE, Tae Min, Daejeon 302-755 (KR); JO, Jung Hee, Daejeon 301-783 (KR)
(74) Representative: Sajda, Wolf E.
(86) International application number: PCT/KR2014/004683
(87) International publication number: WO 2015/030346

(57) **Abstract**

The present invention provides a method and a system for quickly preparing low-salt kimchi, which can enable kimchi materials to be quickly salted down without damaging the same and can sequentially automate a process for preparing kimchi.

The method for quickly preparing low-salt kimchi of the present invention comprises the steps of: heating such that the temperature in the deep part of trimmed and cut kimchi ingredients reaches 35 °C to 60°C and the temperature is maintained for ten minutes or more; immersing the heated and dried ingredients in salt water having the concentration of 3 % to 25 % and maintaining the temperature of 0 °C to 30 °C; cleaning and dehydrating the ingredient immersed in the salt water; and manufacturing kimchi by mixing seasoning with the cleaned and dehydrated kimchi ingredients.

Furthermore, the system for quickly preparing low-salt kimchi of the present invention comprises: a heat treatment device which heats trimmed and cut ingredients such that the temperature in the deep part of the ingredients reaches 35 °C to 60°C, and which dries the ingredients such that the ingredients weigh 80 % to 95 % of the original weight; a brine cooling immersion device for immersing the ingredients that have passed through the heat treatment device in salt water having the concentration of 3 % to 25 % and maintaining the temperature of 0 °C to 30 °C; and a cleaning device for cleaning the ingredients that have passed through the brine cooling immersion device.

## Description

### TECHNICAL FIELD

The present invention relates to a method for quickly salting kimchi ingredients, and a method and system for quickly preparing low-salt kimchi, and more particularly, to a method for quickly salting kimchi ingredients, and a method and system for quickly preparing low-salt kimchi that involve rapidly wilting a kimchi ingredient by heat and soaking and cooling down it in a brine, thereby conducting the procedures in succession to prepare kimchi with good texture and preservability and realizing kimchi production on a large scale with an aid of automation.

### BACKGROUND ART

Kimchi is a well-known excellent food native to Korea made by fermentation after adding subsidiary ingredients and spices, such as crushed red pepper flakes, garlic, green onions, ginger, fish sauce, etc. to a main vegetable ingredient such as Napa cabbage, Korean radish, etc. Kimchi has recently been proven to give anti-cancer, anti-ageing and immune-boosting effects and developed as a world-famous health food.

Kimchi is largely made in four steps: salting a main vegetable ingredient, such as napa cabbage, leaf mustard, young radish, Korean radish, etc., rinsing, adding subsidiary ingredients like seasonings, and storing at low temperature for fermentation.

In the kimchi-making procedures, the salting step, that is, the wilting step is a process of making the hard texture of the vegetables like napa cabbage somewhat soft to have the vegetables well mixable with the subsidiary ingredients and to enhance the texture of kimchi completed.

In the case of the conventional kimchi, the main vegetable ingredient like napa cabbage, leaf mustard, young radish, etc. is brought into saturation with a large quality of salt in the brine-soaking step, possibly increasing the salinity of the main ingredient and ending up with the failure to control the salinity of the main ingredient to be even.

But, when using a low quantity of salt in making kimchi as a solution to this problem possibly, the kimchi is prone to poor fermentation, mushy texture and no good kimchi savor, and in severe cases, spoilage, stale odor or stench. In addition, using a low quantity of salt can shorten the storage period and greatly deteriorate the sensory quality of kimchi due to the tissue of the main ingredient turning extremely mushy during the storage.

For this reason, it is a tendency to use a large quantity of salt in the salting step and, if necessary, to maintain the higher sodium content in kimchi for long-term storage or kimchi for export that requires a long-term transportation.

Despite the fact that kimchi is widely known as a health food, using a large quantity of salt in the salting step, that is, the wilting step can deteriorate the value of kimchi as a health food with high salinity and give the risk of causing or worsening various diseases due to great dietary salt intake.

KR Patent Nos. 10-0796132, 10-1256804, 10-0213853, and 10-2011-0112691 disclose different techniques to reduce the sodium content in kimchi and shorten the salting time in the kimchi-making process. These conventional techniques involve salting the main kimchi ingredient in brine containing salt dissolved in electrolyzed reduced water; or wilting the main kimchi ingredient in hot steam; or brining the main ingredient into contact with a highly concentrated brine and then storing it at high temperature; or quickly salting the main ingredient under reduced pressure.

According to the conventional kimchi-making techniques, however, it is difficult to prevent the tissue of the main ingredient from being destroyed or deformed, to salt the main ingredient evenly, and to control the salinity as low as enough.

Further, the salting step takes approximately 6 to 24 hours. This makes it impossible to conduct the kimchi-making procedures in succession and requires the salting process to be conducted using a salting bath in a separate space. Furthermore, the salting step affects the kimchi production, thus limiting the mass production of kimchi.

### DISCLOSURE OF INVENTION

The present invention has been contrived to overcome the problems with the prior art. It is therefore an object of the present invention to provide a method for quickly salting kimchi ingredients, and a method and system for quickly preparing low-salt kimchi that involves heating up a kimchi ingredient with microwaves or hot air and drying the tissue of the ingredient to wilt by heat in a short time, and then soaking and cooling down the wilted kimchi ingredient in a brine, thereby quickly wilting the kimchi ingredient without damage on the properties of the kimchi ingredient and realizing automation of the kimchi-making process in a successive manner.

In accordance with one embodiment of the present invention, there is provided a method for quickly salting kimchi ingredients that includes the step of heating up a well-selected and cut kimchi ingredient to maintain the core temperature of the kimchi ingredient at 35 °C to 60 °C for 10 minutes or longer.

The method for quickly salting kimchi ingredients according to the present invention further includes the step of soaking and cooling down the dried kimchi ingredient in a 3 % to 25 % brine maintained at 0 to 30 °C.

In accordance with another embodiment of the present invention, there is provided a method for quickly preparing low-salt kimchi that includes: heating up a well-selected and cut kimchi ingredient to maintain the core temperature of the kimchi ingredient at 35 to 60 °C for 10 minutes or longer; soaking and cooling down the dried kimchi ingredient in a 3 % to 25 % brine maintained at 0 to 30 °C; rinsing and draining the kimchi ingredient soaked in the brine; and mixing the rinsed and drained kimchi ingredient with a seasoning to prepare kimchi.

Preferably, the heating step includes drying the kimchi ingredient to be 80 to 95 % the original weight thereof.

The heating step may include exposing the well-selected and cut kimchi ingredient to microwaves.

The heating step may also include applying hot air to the well-selected and cut kimchi ingredient.

The heating step may also include applying infrared light to the well-selected and cut kimchi ingredient.

Further, the heating step may include exposing the well-selected and cut kimchi ingredient to microwaves for 2 to 20 minutes while supplying air to the kimchi ingredient and then applying hot air or infrared light to the kimchi ingredient to maintain the core temperature of the kimchi ingredient at 35 to 60 °C.

Furthermore, the heating step may include repeatedly conducting the exposure to microwaves and the application of hot air or the application of infrared light.

In accordance with still another embodiment of the present invention, there is provided a system for quickly preparing low-salt kimchi that includes: a heating device for heating up a well-selected and cut kimchi ingredient to have the core temperature of the kimchi ingredient at 35 °C to 60 °C and drying the kimchi ingredient to be 80 to 95 % the original weight; a brine-soaking and cooling device for soaking the kimchi ingredient fed from the heating device in a 3 % to 25 % brine maintained at 0 to 30 °C for 10 to 40 minutes; and a rinsing device for rinsing the kimchi ingredient fed from the brine-soaking and cooling device.

The system for quickly preparing low-salt kimchi may further include a draining device for draining water from the kimchi ingredient fed from the rinsing device; and a seasoning mixing device for mixing a seasoning with the kimchi ingredient drained by the draining device.

The heating device includes a microwave heating device for applying microwaves to the well-selected and cut kimchi ingredient for 2 to 20 minutes while supplying air to the kimchi ingredient; and a hot air blowing device for applying hot air to the kimchi ingredient being transported on a conveyor and fed from the microwave heating device to maintain the core temperature of the kimchi ingredient at 35 °C to 60 °C, and drying the kimchi ingredient for 10 to 30 minutes to be 80 to 95 % the original weight.

The heating device may comprise the microwave heating device alone; or a combination of the microwave heating device and the hot air blowing device arranged in succession on the same transfer conveyor; or a combination of the microwave heating device and the hot air blowing device repeatedly arranged on a same transfer conveyor; or the hot air blowing device alone.

The microwave heating device includes a magnetron for generating microwaves; a wave director for applying the generated microwaves; a microwave absorbing/shielding device for preventing leaks of microwaves at an inlet and an outlet for the kimchi ingredient; a controller for controlling the output and operating time of the magnetron; and an air blower for sucking external air and supplying it to the top portion of the transfer conveyor.

Preferably, the transfer conveyor is a net conveyor or a conveyor made up of a perforated plate having a number of holes that is capable of helping the flows of ambient-temperature air and hot air to bring the kimchi ingredient into the maximum contact with the ambient-temperature air and hot air.

The brine-soaking and cooling device may include: a soaking bath storing brine; a moving device for moving the brine-soaked kimchi ingredient in the soaking bath; and a brine feeding device for supplying the brine in a jet.

The rinsing device may include: a rising bath storing rinsing water; and a rinsing water feeding device arranged on both side surfaces and the bottom surface of the rinsing bath to supply the rinsing water in a jet.

The draining device may include a rotary draining device arranged at the bottom of a load container waiting for the kimchi ingredient being transported on a declined conveyor from the rinsing device to drain water from the kimchi ingredient fed from the load container by rotation.

Further, the draining device may include a net conveyor for conveying the kimchi ingredient from the rinsing device; and a compression conveyor arranged on the top of the net conveyor to convey and compress the kimchi ingredient while the kimchi ingredient is stuck between the net conveyor and the compression conveyor.

Between the brine-soaking and cooling device and the rinsing device may be arranged a cross-linking conveyor for conveying the kimchi ingredient from the soaking bath to the rinsing bath of the rinsing device.

Between the rinsing bath of the rinsing device and the draining device may be arranged a declined conveyor for conveying the kimchi ingredient from the rinsing bath to the load container of the draining device.

The hot air blowing device, which is connected to the microwave heating device and the conveyor, may include a hot air tunnel provided to surround the top and bottom and both sides of a transfer conveyor provided in the form of plural stages vertically arranged; an air blower for forcing hot air in the horizontal direction of the transfer conveyor from the lateral surface of the hot air tunnel; an air filter for filtering out foreign materials from the air circulating through the air blower; and a heater for heating up the circulating air and the external air.

The hot air blowing device may further include a heat recovery device for recovering and recycling heat by transferring heat from the exhaust air of the microwave heating device and the hot air blowing device to the incoming external air.

### EFFECTS OF THE INVENTION

In the method for quickly salting kimchi ingredients, the method for quickly preparing low-salt kimchi and the system for quickly preparing low-salt kimchi according to the embodiments of the present invention, the wilting process, that is, the salting process for kimchi ingredients can be accomplished in a short time of about one hour. It is therefore possible to make kimchi on a mass production basis with introduction of an automation process and to greatly reduce the production cost of kimchi.

In the method for quickly salting kimchi ingredients, the method for quickly preparing low-salt kimchi and the system for quickly preparing low-salt kimchi according to the embodiments of the present invention, the process of wilting and salting a kimchi ingredient can be completed in no more than about one hour by conducting a heating process using microwaves, hot air or infrared light and a brine-soaking process using a brine.

This makes it possible to prevent the cellular membranes of the kimchi ingredients from being deformed or destroyed, to control the salinity of the kimchi ingredients under necessity by adjusting the salinity and temperature of the brine and the soaking time, to concentrate the effective components in the cellular membrane during the drying process, and to minimize a loss of the effective components of the kimchi ingredients even in the subsequent rinsing and draining process.

In the method for quickly salting kimchi ingredients, the method for quickly preparing low-salt kimchi and the system for quickly preparing low-salt kimchi according to the embodiments of the present invention, the process of salting the kimchi ingredients with a great quantity of salt can be omitted, but it is still possible to wilt the kimchi ingredients sufficiently as required in the kimchi preparation and to minimize damages on the tissue caused by the wilting process, thereby maintaining good texture of the kimchi completed.

Further, the ageing of kimchi can be controlled by reducing the actions of the ageing-related intrinsic factors (i.e., density of ageing-related enzymes, yeasts, or microorganisms) of the kimchi ingredient such as Napa cabbage, etc., resulting in the production of low-salt kimchi with innovatively enhanced preservability.

According to the method for quickly salting kimchi ingredients, the method for quickly preparing low-salt kimchi and the system for quickly preparing low-salt kimchi according to the embodiments of the present invention, the brine-soaking and draining process can be accomplished in 40 minutes or less so that the salt of the brine can be kept from penetrating into the kimchi ingredient, which enables the production of low-salt kimchi.

Further, in the method for quickly salting kimchi ingredients, the method for quickly preparing low-salt kimchi and the system for quickly preparing low-salt kimchi according to the embodiments of the present invention, the kimchi ingredient is cooled down in a cold brine or a cold rinsing water.

This can not only prevent the reduction of the wilting effect caused by the reabsorption of water by the kimchi ingredient in the subsequent rinsing and draining process, but also maximize the heating effect of the drying process that is conducted in place of the conventional salting process.

In the method for quickly salting kimchi ingredients, the method for quickly preparing low-salt kimchi and the system for quickly preparing low-salt kimchi according to the embodiments of the present invention, the kimchi preparation process is conducted in the similar way to the conventional kimchi preparation process but innovatively takes far less time in wilting the kimchi ingredient, thereby greatly reducing the production cost of kimchi.
ccording to the present invention, kimchi can be made under the same conditions of the conventional kimchi preparation method, so the present invention is readily applicable to the conventional kimchi preparation process.

### BRIEF DESCRIPTIONS OF DRAWINGS

- FIG. 1: is a schematic flow chart of a method for quickly salting kimchi ingredients in accordance with a first embodiment of the present invention.
- FIG. 2: is a schematic flow chart of a method for quickly salting kimchi ingredients in accordance with a second embodiment of the present invention.
- FIG. 3: is a schematic flow chart of a method for quickly salting kimchi ingredients in accordance with a third embodiment of the present invention.
- FIG. 4: is a schematic block diagram of a system for quickly preparing low-salt kimchi in accordance with a fourth embodiment of the present invention.
- FIG. 5: is a schematic side view of the system for quickly preparing low-salt kimchi in accordance with the fourth embodiment of the present invention.
- FIG. 6: is a schematic plane view of a microwave heating device having an air blowing function as included in the system for quickly preparing low-salt kimchi in accordance with the fourth embodiment of the present invention.
- FIG. 7: is a schematic cross-sectional view of the microwave heating device in the system for quickly preparing low-salt kimchi in accordance with the fourth embodiment of the present invention as taken by the line B-B of FIG. 6;
- FIG. 8: is a schematic cross-sectional view of a rotary drum hot air blowing device in the system for quickly preparing low-salt kimchi in accordance with the fourth embodiment of the present invention as taken by the line A-A of FIG. 5;
- FIG. 9: is a schematic side view of a system for quickly preparing low-salt kimchi in accordance with a fifth embodiment of the present invention.
- FIG. 10: is a schematic plane view of a conveyor hot air blowing device in the system for quickly preparing low-salt kimchi in accordance with the fifth embodiment of the present invention.
- FIG. 11: is a schematic cross-sectional view of the conveyor hot air blowing device in the system for quickly preparing low-salt kimchi in accordance with the fifth embodiment of the present invention as taken by the line C-C of FIG. 10;
- FIG. 12: is a schematic cross-sectional view of the conveyor hot air blowing device in the system for quickly preparing low-salt kimchi in accordance with the fifth embodiment of the present invention as taken by the line D-D of FIG. 10;
- FIG. 13: is a schematic cross-sectional view corresponding to FIG. 12 and showing another example of the conveyor hot air blowing device in the system for quickly preparing low-salt kimchi in accordance with the fifth embodiment of the present invention.
- FIG. 14: is a schematic side view of a system for quickly preparing low-salt kimchi in accordance with a sixth embodiment of the present invention.
- FIG. 15: is a schematic plane view showing a combination of a microwave heating device and a hot air blowing device repeatedly arranged in a system for quickly preparing low-salt kimchi in accordance with a seventh embodiment of the present invention.

### BEST MODES FOR CARRYING OUT THE INVENTION

A detailed description will be given as to the preferred embodiments of a method for quickly salting kimchi ingredients and a quick preparation method and system for low-salt kimchi according to the present invention with reference to the accompanying drawings.

The present invention is enabled to realize in different modes and not limited to the embodiments in the following description.

In the following description, the same reference numerals will be assigned to elements and structures identical to those of the related art and detailed description thereof will be omitted in order to avoid redundancy.

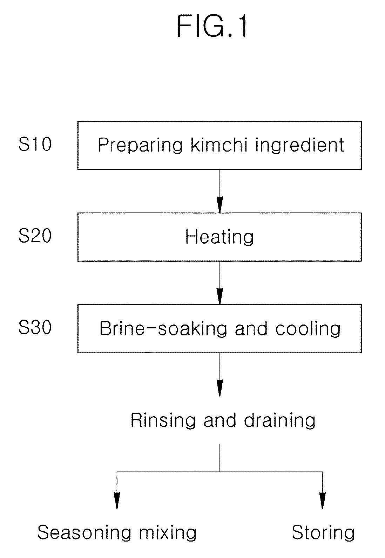

First of all, in accordance with a first embodiment of the present invention, there is provided a method for quickly salting kimchi ingredients that includes, as illustrated in FIG. 1, a heating step S20 for heating up a main kimchi ingredient; and a brine-soaking and cooling step S30 for soaking the kimchi ingredient in brine.

The method for quickly salting kimchi ingredients may further include a main ingredient preparing step S10 of preparing the kimchi ingredient prior to the heating step S20.

The kimchi ingredient as used herein may include a variety of vegetables, such as Napa cabbage, young radish, Korean radish, leaf mustard, cabbage, green onion, etc., and wild edible greens.

Just like the general procedure of trimming kimchi ingredients before making kimchi, the main ingredient preparing step S10 involves shaking soil or dust off the kimchi ingredient, removing the kimchi ingredient of withered, damaged or unwanted parts, cutting it into pieces in a proper size to make kimchi, or making cuts in the kimchi ingredient.

If necessary, the main ingredient preparing step S10 may further involve conducting a first rinsing of the kimchi ingredient prepared.

Preferably, the main ingredient preparing step S10 includes sorting out the kimchi ingredients based on their thickness to prepare the kimchi ingredient.

In this regard, as the kimchi ingredients vary in water content depending on their thickness, sorting out the kimchi ingredients based on their thickness makes it possible not only to heat up the ingredients of the equivalent water content evenly under the same heating conditions but also to conduct drying so that the kimchi ingredients entirely have an even water content.

In the main ingredient preparing step S10, the rinsed and well-selected kimchi ingredient may be cut into 2 to 4 pieces and then chopped up.

In the heating step S20, the well-selected and cut kimchi ingredient is heated up to increase the core temperature to 35 to 60 °C and dried to be 80 to 95 % its original weight.

Preferably, the heating step S20 includes maintaining the core temperature of the kimchi ingredient at 35 to 60 °C for 10 minutes or longer in order to make enzymes, yeasts and microorganisms of the ingredient inactive.

The heating step S20 may use a batch type cabinet heating method to put the kimchi ingredient in a colander and heat it up to dry; a conveyor heating method to heat up the kimchi ingredient loaded and transported on a conveyor; or a rotary drum heating method to put the kimchi ingredient into a rotary drum and heat it up while the rotary drum is spinning. The heat source as used herein may include microwaves, hot air, infrared light, etc.

For example, the heating step S20 may include exposing the well-selected and cut kimchi ingredient to microwaves for 2 to 20 minutes and then applying hot air or infrared light to the kimchi ingredient so that the core temperature of the kimchi ingredient is maintained at 35 to 60 °C.

Preferably, it is controlled to irradiate the microwaves to the level of 0.1 to 1.0 W per 1 g for 2 to 20 minutes depending on the material temperature of the kimchi ingredient.

By using the microwaves to heat the kimchi ingredient up, the kimchi ingredient can have a weight loss of about 2 % to 10 % due to evaporation of water and a rapid rise of its temperature.

The heating step S20 may also include exposing the kimchi ingredient to microwaves while supplying the external air or the sucked-in hot air maintained at 40 to 60 °C to the kimchi ingredient. This can prevent the thin portion of the kimchi ingredient, that is, the portion with low water content from being damaged due to overheat from the microwaves, so that the air stream can eliminate heat from the overheated portion of the kimchi ingredient, making it possible to have the temperature of the kimchi ingredient entirely even.

After an exposure to the microwaves, hot air or infrared light is applied to the kimchi ingredient to maintain the core temperature of the kimchi ingredient at 35 to 60 °C, so the kimchi ingredient can be dried by heat to be 80 to 95 % its original weight.

The hot air is circulated and applied to the kimchi ingredient to raise or lower the temperature of the kimchi ingredient preheated or heated by the microwaves so that temperature of the kimchi ingredient reaches a given temperature, close to the temperature of the hot air and even as possible, thereby drying the ingredient by heat.

The infrared light is applied to the kimchi ingredient preheat or heated by the microwaves to maintain the core temperature of the kimchi ingredient at 35 to 60°C, thereby drying the kimchi ingredient by heat.

Applying hot air or infrared light to the kimchi ingredient reduces the weight of the kimchi ingredient by approximately 5 to 15 % and renders enzymes, yeasts and microorganisms of the kimchi ingredient inactive.

Also, the heating step S20 may include exposing the well-selected and cut kimchi ingredient to microwaves without applying hot air or infrared light. In this case, it is preferable to irradiate the microwaves as low as possible for 2 to 20 minutes to evenly heat up kimchi ingredient up to 35 to 60°C.

Also, the heating step S20 may include applying hot air and infrared light simultaneously or separately to the well-selected and cut kimchi ingredient without irradiation of microwaves so that the core temperature of the kimchi ingredient is maintained at 35 to 60°C.

In the case of using hot air alone, conduction heat as a result of the convention current is used to heat up the kimchi ingredient, taking a long time. It is thus desirable to circulate hot air at high temperature approximating 70°C, raising the temperature of the ingredient up to about 40°C as long as the tissue of the kimchi ingredient has no damage, and then to circulate hot air at about 50 to 60°C for 1 to 2 hours, thereby drying the kimchi ingredient by heat without overheating up to above 60°C.

Further, in the case of using infrared light alone, radiant heat is used to heat up the kimchi ingredient. It is therefore preferable to irradiate infrared light evenly on the kimchi ingredient within the temperature range that does no damage to the tissue of the kimchi ingredient, raising the core temperature of the kimchi ingredient up to 35 to 60°C, and to keep drying the kimchi ingredient by heat for 10 minutes or longer.

In this regard, when wilting a thin kimchi ingredient, such as chopped cabbage for mak-kimchi, leaf mustard, young radish, etc., hot air and infrared light can be applied simultaneously or separately without using microwaves.

This case is considered economical in the aspect of facility investment for the reason that the convection heat of hot air and the radiant heat of infrared light can be transferred into the kimchi ingredient in a short time to dry the kimchi ingredient by heat.

The heating step S20 may also include repeatedly conducting a process of applying microwaves and a process of applying hot air and infrared light simultaneously or separately. In this case, it is desirable to repeatedly apply microwaves for a short time of 1 to 3 minutes and hot air or infrared light for 3 to 5 minutes so that the core temperature of the kimchi ingredient is entirely maintained at 35 to 60 °C for 10 minutes or longer to dry the kimchi ingredient by heat without overheating any part of the kimchi ingredient.

By using microwaves, hot air and infrared light to maintain the internal (core) temperature of the kimchi ingredients at about 35 to 60 °C and dry the kimchi ingredients by heat, it is possible to prevent a loss of flavors and a deterioration of texture of the main ingredient caused by evaporation of water from the inside of the ingredients and to enhance the drying speed of the ingredients.

In other words, it prevents the cellular tissue, that is, the cellular membrane of the kimchi ingredients from being spoiled, deformed, damaged, or destroyed by heat and keeps the effective components contained in the cellular membrane from being released out in company with the evaporation of water.

As the cellular membrane of the kimchi ingredient is not destroyed, the kimchi ingredient is dried out by the release of water alone from the cellular membrane of the tissue, leaving the effective components in the cellular membrane.

When a drying process is conducted in the heating step S20 to have the main kimchi ingredient greater than 95 % its original weight, the kimchi ingredient is not dried enough, with water remaining in the tissue. This gives no wilting effect similar to the salting effect acquired with a large quantity of salt.

When a drying process is conducted in the heating step S20 to have the main kimchi ingredient less than 80 % its original weight, the crispy texture of the kimchi thus prepared may deteriorate.

By conducting the heating step S20, it is possible to eliminate water from the tissue of the main ingredient in the shorter time without a salting process using a large quantity of salt and to minimize any change in the constituent components of the main ingredient, thereby preventing damages of the tissue and maintaining good texture. Further, the crispy texture of the main kimchi ingredient can be maintained without increasing the sodium content of the kimchi.

As the kimchi ingredient dried by heat in the heating step S20 is wilted, it may be directly mixed with a seasoning to make kimchi without the brine-soaking and cooling step S30. In an alternative way, the dried kimchi ingredient may be soaked and cooled down in water at room temperature rather than in a brine for a short time, drained and then mixed with a seasoning into kimchi.

In other words, the method for quickly salting kimchi ingredients according to the first embodiment of the present invention can be realized with the heating step S20 alone.

The brine-soaking and cooling step S30 is wilting the kimchi ingredient by soaking it in a 3 % to 25 % brine maintained at 0 to 30 °C.

The brine-soaking and cooling step S30 includes soaking the dried ingredient in the brine for 10 to 40 minutes.

Brining the kimchi ingredient causes part of the water to release from the cells of the kimchi ingredient, thereby further reducing the water content by 3 to 10 %.

In the brine-soaking and cooling step S30, it is possible to control the degree of wilting and the target salinity of the kimchi ingredient by adjusting the salinity and temperature of the brine and the soaking time.

When the temperature of the brine is below 30 °C in the brine-soaking and cooling step S30, the kimchi ingredient heated up in the heating step S20 is cooled down.

Cooling down the kimchi ingredient makes it possible to prevent the tissue of the heated kimchi ingredient from being spoiled at high temperature over a long time and to make the degree of wilting uniform all over the tissue regions.

The wilting process for kimchi ingredient that includes the heating step S20 and the brine-soaking and cooling step S30 can reduce the required wilting time to about 40 to 60 minutes.

After the brine-soaking and cooling step S30, the kimchi ingredient may be subjected to a rinsing and draining step and a seasoning mixing step in sequence, which enables the kimchi making process conducted in a successive manner.

If the kimchi ingredient wilted in the brine-soaking and cooling step S30 needs to be stored for a long time, it may be rinsed, drained and then kept in an isotonic solution having salinity of 2.5 %. An addition of ascorbic acid (500 ppm to 2000 ppm) to the isotonic solution can prevent discoloration.

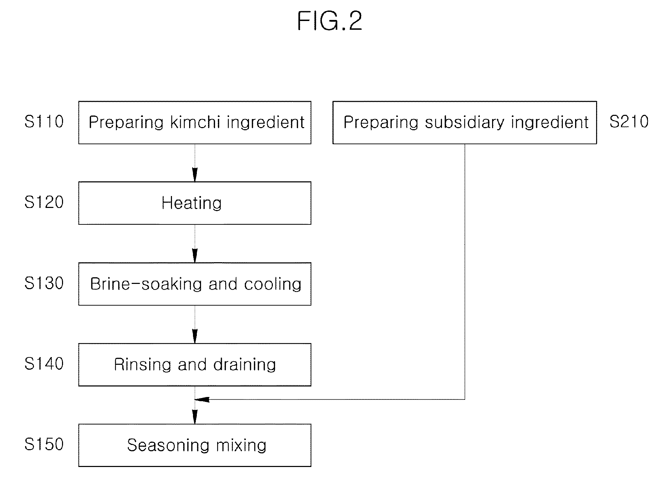

In accordance with a second embodiment of the present invention, there is provided a method for quickly preparing low-salt kimchi that includes, as illustrated in FIG. 2, a heating step S120 of drying a kimchi ingredient; a brine-soaking and cooling step S130 of salting the main kimchi ingredient with a low-salt brine cooled down; a rinsing and draining step S140 of conducting rinsing and draining; and a seasoning mixing step S150 of mixing the main kimchi ingredient with subsidiary ingredients.

The method for quickly preparing low-salt kimchi may further include a main ingredient preparing step S110 of trimming a kimchi ingredient prior to the heating step S120.

The main ingredient preparing step S110, the heating step S120 and the brine-soaking and cooling step S130 may be constructed in the same manner as the main ingredient preparing step S10, the heating step S20 and the brine-soaking and cooling step S30 of the first embodiment, and detailed description thereof will be omitted in order to avoid redundancy.

The method for quickly preparing low-salt kimchi according to the second embodiment of the present invention may further include a subsidiary ingredient preparing step S210 of preparing a kimchi seasoning (subsidiary ingredient).

The subsidiary ingredients for kimchi as used herein may include all of different seasonings, such as crushed red pepper flakes, red pepper, garlic, green onion, ginger, onion, salted seafood, fish sauce, salt, etc.

The subsidiary ingredients (seasoning) for kimchi may be available in any form of powder, liquid, shreds, mince, etc.

The rinsing and draining step S140 is conducted by rinsing and draining of the kimchi ingredient salted and cooling down in the brine-soaking and cooling step S130.

The rinsing and draining step S140 may include rinsing the wilted kimchi ingredient with rinsing water and draining the water from the kimchi ingredient.

The rinsing and draining step S140 may further include cutting the kimchi ingredient into pieces in proper size or removing it of unwanted parts.

The seasoning mixing step S150 is mixing the rinsed and drained kimchi ingredient with the seasoning prepared in the subsidiary ingredient preparing step S210.

The seasoning as used herein may be prepared in advance by making a concoction of different seasonings in a mixer in the subsidiary ingredient preparing step S210.

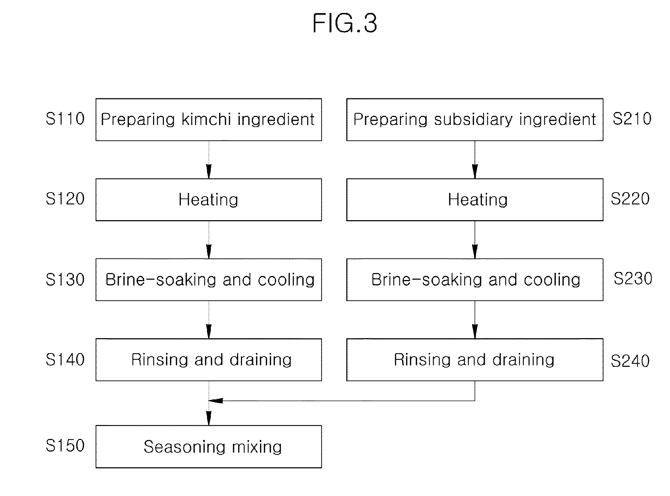

In accordance with a third embodiment of the present invention, there is provided a method for quickly preparing low-salt kimchi that includes, as illustrated in FIG. 3, conducting a heating step S220, a brine-soaking and cooling step S230, and a rinsing and draining step S240 on the subsidiary ingredients prepared in the subsidiary ingredient preparing step S210; and then sending the subsidiary ingredients to the seasoning mixing step S150.

In this regard, the heating step S220, the brine-soaking and cooling step S230 and the rinsing and draining step S240 for the subsidiary ingredients may be constructed in the same manner as the heating step S120, the brine-soaking and cooling step S130 and the rinsing and draining step S140, and detailed description thereof will be omitted in order to avoid redundancy.

Preferably, the heating step S120, the brine-soaking and cooling step S130 and the rinsing and draining step S140 are applied to the subsidiary ingredients not used in the powder or liquid form, such as green onions, onions, peppers, etc.

As for the kimchi seasoning, under necessity, the subsidiary ingredients may be prepared without any separate treatment or through the heating step S220 and the brine-soaking and cooling step S230. In an alternative way, depending on the type of the ingredients, some may be prepared without any separate treatment, and some may be prepared through the heating step S220 and the brine-soaking and cooling step S230.

The quick preparation methods for low-salt kimchi according to the second and third embodiments of the present invention as constructed above provide an alternative to the salting process in the conventional kimchi preparation method, minimizing the change of the process. Thus, only a low facility cost is required to realize the present invention, minimizing the rise of the production cost or reducing the production cost.

It is also possible to provide a low-salt kimchi having sodium content below 1 % as needed by customers or patients with high preservability so that it is not prone to softening.

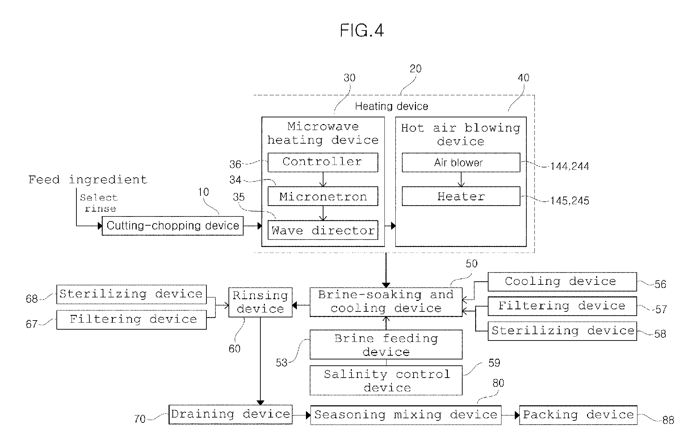

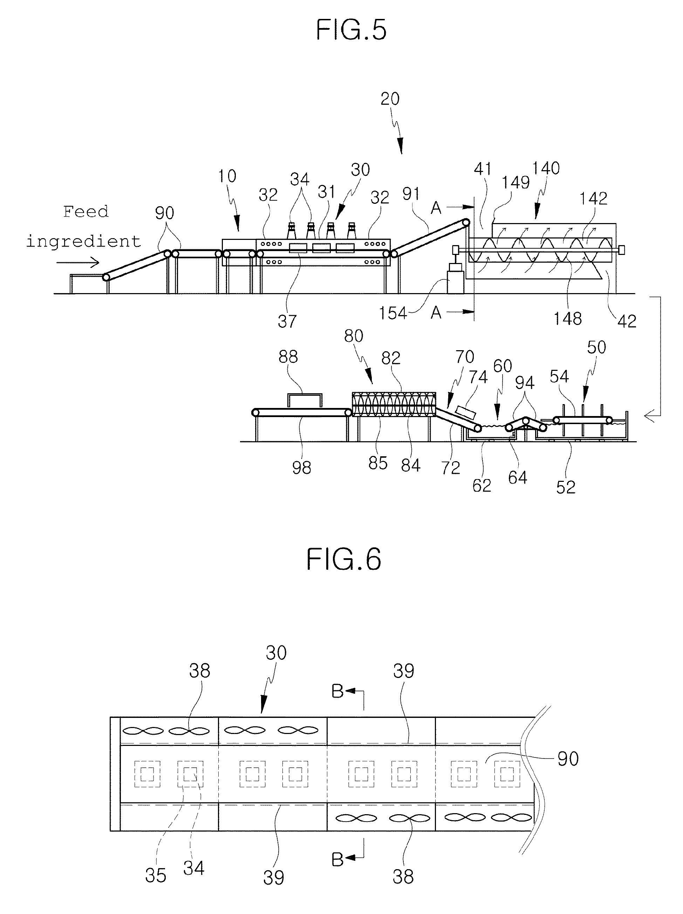

In accordance with a fourth embodiment of the present invention, there is provided a system for quickly preparing low-salt kimchi that includes, as illustrated in FIGS. 4 and 5, a heating device 20, a brine-soaking and cooling device 50, a rinsing device 60, and a draining device 70.

The heating device 20 is constructed to heat up the well-selected and cut kimchi ingredients transported on a conveyor 90, increasing the core temperature of the kimchi ingredients to 35 to 60 °C and drying the ingredient to be 80 to 95 % of their original weight.

For example, the heating device 20 includes a microwave heating device 30 and a hot air blowing device 40.

The microwave heating device 30 conducts a heat treatment by applying microwaves to the well-selected and cut kimchi ingredients transported on the conveyor 90 for 2 to 20 minutes, with an air blower 38 sucking the external air and forcing it to the kimchi ingredients.

Before the microwave heating device 30 may be provided a cutting-chopping device 10 for cutting the kimchi ingredient in a given size (for example, into 2 or 4 pieces, or the smaller pieces).

The cutting-chopping device 10 may be constructed to cut the kimchi ingredient on the conveyor 90 into 2 or 4 pieces and then chop it up in the smaller size of several millimeters to centimeters as favored by the customers.

The cutting-chopping device 10 may be constructed using a cutting machine with blades making an up-and-down reciprocating motion, or a cutting machine with rotating blades or saw blades.

The microwave heating device 30 includes a magnetron 34 for generating microwaves; a wave director 35 for applying the generated microwaves; and a controller 36 connected to a power supply to control the output and operating time of the magnetron 34.

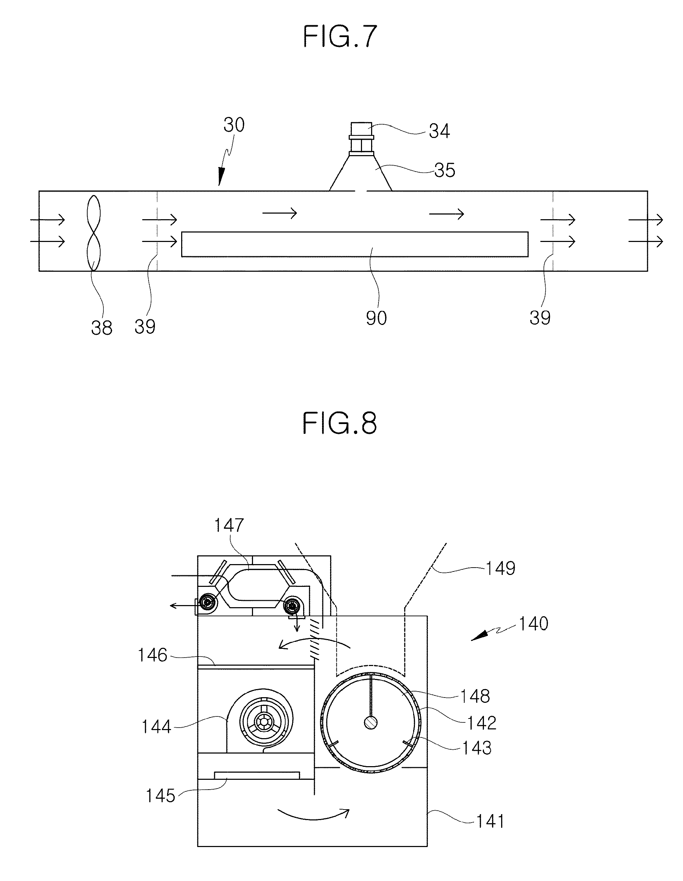

As shown in FIGS. 6 and 7, the microwave heating device 30 may further include the air blower 38 for sucking external air or hot air and applying it to the kimchi ingredient to lower the temperature of the kimchi ingredient so that the thin portion of the kimchi ingredient transported on the conveyor 90 is not damaged due to overheat by the microwaves.

The air forced by the air blower 38 needs to be in good contact with the kimchi ingredient in order to remove heat from the overheated portion. As circumstances require, a separate suction fan may be mounted on the side of an air outlet to create a push-pull air flow.

The air blower 38 may be arranged higher than the horizontal height of the conveyor 90 to facilitate the internal cleaning and maintenance of the microwave heating device 30.

Preferably, a shield 39 for absorbing microwaves to prevent a leak of microwaves is mounted on an air inlet and an air outlet for air supply in the air blower 38.

As shown in FIG. 5, the microwave heating device 30 may further include a microwave absorbing/shielding device 32 provided on the side of the inlet and outlet for kimchi ingredient in order to prevent a leak of microwaves.

Preferably, the microwave absorbing/shielding device 32 has a plurality of silicone tubes or Teflon tubes on the inner top and bottom on the side of the inlet and outlet for kimchi ingredient to fill with water or circulate water, thereby absorbing the leaking microwaves.

On a part of a main body case 31 of the microwave heating device 30 may be arranged a clear window 37 to see the heated status of the kimchi ingredient under heat treatment with the naked eye.

Preferably, the shield 39 for absorbing microwaves to prevent a leak of microwaves is mounted on the clear window 37, as shown in FIG. 5.

The material of the microwave heating device 30 and the parts like rollers, etc. and the material of the conveyor 90 are required to be safe to microwaves and made to have the interior structure safe enough not to cause electrical spark or surge.

In the microwave heating device 30, the controller 36 is operated to control the magnetron 34 so that the kimchi ingredient is exposed to the microwave powder in the range of 0.1 to 1.0 W/g (ingredient) for 2 to 20 minutes.

The controller 36 is connected to the power supply and may be constructed to control the microwave output by control of the power supply to the magnetron 34.

Preferably, the time to expose the kimchi ingredient to the microwaves is set by controlling the time for the kimchi ingredient to pass through the microwave heating device 30 (e.g., the transport speed of the conveyor 90); and the core temperature and the outside temperature of the kimchi ingredient are controlled to increase within a given range, but with narrow variations as possible, in a short time by adjusting the microwave power and intensity, that is, the output of the microwaves depending on the processing step of the kimchi ingredient, that is, the time slot of the ingredient entering the microwave heating device 30.

For example, the core temperature of the kimchi ingredient tissue increases up to 35 to 40 °C when the kimchi ingredient passing through the microwave heating device 30 is exposed to 0.1 to 1.0 W/g of microwave power for 3 to 5 minutes.

As the temperature of the thin ingredients or the thin portions of the cabbage leaf with low water content can rise up to 60 °C or above, it is preferable to heat up the kimchi ingredients while supplying external air at the room temperature to the kimchi ingredients by way of the air blower 38 in order to prevent the defined portions of the ingredients from being boiled or damaged by overheat.

Accordingly, heating up the kimchi ingredients with the microwave heating device 30 can reduce the weight of the ingredient by about 5 to 10 % due to evaporation of water and quickly increase the temperature of the ingredients.

Preferably, the water vapor generated in the microwave heating device 30 during the process of heating up the kimchi ingredients is released to the exterior as shortly as possible to prevent a waste of the microwave power heating up the air containing water vapor.

Further, the heat of the air for cooling down the magnetron 34 can be recovered with a heat recovery device and then transferred to the external air fed into the microwave heating device 30 or the hot air blowing device 40 or directly supplied to the hot air blowing device 40 to reduce a waste of energy.

The transfer conveyor 90 may be constructed using a belt conveyor or a net conveyor.

The hot air blowing device 40 applies hot air to the kimchi ingredient transported from the microwave heating device 30 to maintain the core temperature of the ingredient in the range of 35 to 60 °C and dries the ingredient by heat for 10 to 40 minutes so that the kimchi ingredient is 80 to 95 % its original weight.

In the hot air blowing device 40, an ingredient inlet 41 for the kimchi ingredient transported on a transfer conveyor 91 from the microwave heating device 30 is provided in the opposite direction to an ingredient outlet 42 for the kimchi ingredient dried by hot air.

The hot air blowing device 40 may comprise a rotary drum hot air blowing device 140.

The rotary drum hot air blowing device 140 includes, as illustrated in FIGS. 5 and 8, a porous rotary drum 142 being mounted to be rotatable in a case 141 and having a number of pores on the cylindrical surface thereof; a plurality of agitating blades 143 being mounted on the inner surface of the rotary drum 142 and protruding towards the center of the rotary drum 142; a screw 148 provided in the rotary drum 142 and mounted to be rotatable together with the rotary drum 142; and an air blower 144 for forcing hot air towards the rotary drum 142.

Between the air blower 144 and the rotary drum 142 is arranged a heater 145 for heating up the air from the air blower 144.

Further, an air filter 146 may be provided on the side of a suction inlet of the air blower 144 to filter out for foreign materials of the air sucked into the air blower 144.

Further, a heat recovery device 147 may be provided to recover the released heat and reduce a waste of energy by a heat exchange between the hot air released from the rotary drum 142 and the external air sucked into the suction inlet of the air blower 144.

On the side of the inlet 41 may be formed a hopper 149 for guiding the kimchi ingredient on the transfer conveyor 91 into the rotary drum 142.

Further, a motor 154 for rotating the rotary drum 142 is provided on the outside of the case.

The rotating shaft of the rotary drum 142 is connected to that of the motor 154 by way of a power transmission device.

The power transmission device as used herein may include any form of power transmission means, such as chain and sprocket, belt and pulley, gears, etc.

At the one end of the rotary drum 142, as shown in FIG. 5, an inlet opening connected to the hopper 149 is formed on the one side of the cylindrical surface.

As the above-constructed rotary drum 142 makes a rotation, the kimchi ingredient entering from the ingredient inlet 41 can be fed into the rotary drum 142 through the inlet opening whenever the inlet opening is in interconnection with the hopper 149.

While the rotary drum 142 is rotated to align the inlet opening in interconnection with the hopper 149 and supply the kimchi ingredient through the ingredient inlet 41, the rotation of the rotary drum 142 may be suspended temporarily to facilitate the entry of the kimchi ingredient into the rotary drum 142. In this case, the motor 154 is controlled to have a temporary stop of its rotation.

On the opposite side to the inlet opening of the rotary drum 142 is formed an outlet opening connected to the ingredient outlet 42 to let the ingredient out.

The rotary drum 142 may be formed with a perforated plate having a number of holes, or a net-shaped wire mesh sheet.

The screw 148 may be provided in the rotary drum 142, as shown in FIGS. 5 and 8, to facilitate the transport of the kimchi ingredient from the inlet opening to the outlet opening as it rotates.

The screw 148 is fixedly amounted to be rotatable together with the rotary drum 142. In this regard, the rotating shaft of the rotary drum 142 functions not only as a shaft of the screw 148 but also as a supporting axis for the rotary drum 142 to make a rotation.

In an alternative way, the screw may be amounted to rotate separately rather than together with the rotary drum 142. But, this may cause the kimchi ingredient to be stuck between the screw 148 and the rotary drum 142 and lead to deterioration in the quality due to the destroyed ingredient and possibly a breakdown or malfunction of equipment.

The screw 148 may be formed to have a width connected from the inner surface of the rotatory drum 142 to the shaft; or a width smaller than the radius of the rotary drum 142 to give a space in the center.

Preferably, the agitating blades 143 protrude in the form of a dam connecting the adjacent screws 148 to each other, with a height less than half the radius of the rotary drum 142.

With the agitating blades 143 as constructed above, the transported kimchi ingredient can be kept from gliding along the inner surface of the rotary drum 142 and partly getting in successive contact with hot air. The agitating blades 143 causes the kimchi ingredient in the rotary drum 142 to move upwards in the rotational direction of the rotary drum 142 and drop by gravity, thereby making an agitation on the kimchi ingredient together with the positional shifts.

In other words, the agitating blades 143 make an agitation with up-and-down positional shifts of the kimchi ingredient in such a manner that the kimchi ingredient at the bottom side of the inner surface of the rotary drum 142 gets stuck by the agitating blades 143, moves upwards according to the rotation of the rotary drum 142 and drops by its weight from the top side of the rotary drum 142.

A description will be given as to the operation process of the above-constructed rotary drum hot air blowing device 140 as follows.

For example, the kimchi ingredient transported on the transfer conveyor 91 enters the ingredient inlet 41 of the rotary drum 142 via the hopper 149 and then moves into the ingredient outlet 42 by way of the actions of the agitating blades 143 and the screw 148.

The air forced by the air blower 144 and heated up by the heater 145 moves from bottom to top in the rotary drum 142 through a number of pores formed on the outer circumferential surface of the rotary drum 142.

The hot air moving through inside the rotary drum 142 is brought into contact with the kimchi ingredient moving in the rotary drum 142 from the ingredient inlet 41 to the ingredient outlet 42, thereby drying the kimchi ingredient by heat.

In this manner, the kimchi ingredient in the rotary drum 142 shifts in position by the agitating blades 143 to acquire an agitation and is thus entirely brought into even contact with the hot air to dry by heat.

In the rotary drum hot air blowing device 140, the screw 148 may not be used under circumference.

In the case of not using the screw 148, a technique of moving the kimchi ingredient in a successive manner is not adopted. Instead, a batch of the kimchi ingredient in a given quantity is fed into the rotary drum 142, heated up with hot air and taken out, after which another batch of the kimchi ingredient is fed into the rotary drum 142.

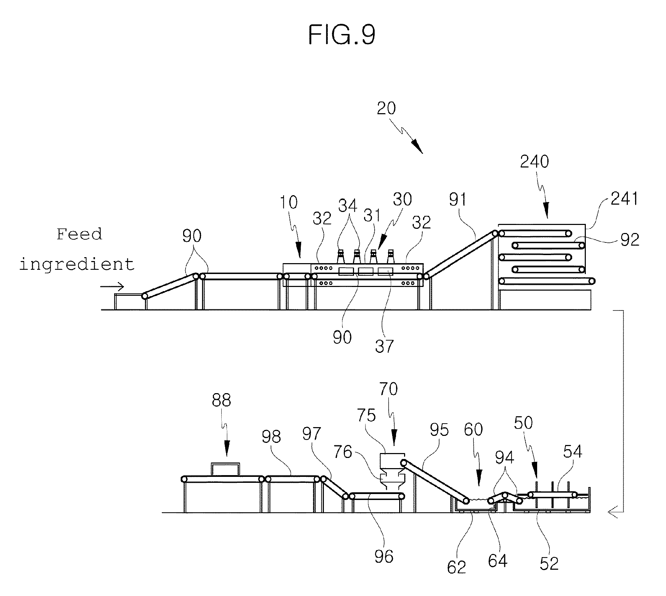

In the method for quickly preparing low-salt kimchi in accordance with a fifth embodiment of the present invention, as shown in FIGS. 9 to 13, the hot air blowing device 40 may comprise a conveyor hot air blowing device 240.

The conveyor hot air blowing device 240 comprises a drying conveyor 92 provided in the form of a plurality of stages vertically arranged in a case 241.

Preferably, the drying conveyor 92 uses a net conveyor or a conveyor comprising a perforated plate having a number of holes so as to facilitate a flow of the hot air and maximize the contact of the hot air with the kimchi ingredient.

In the case of constructing the drying conveyor 92 in one successive unit, it takes about 2.4 m of the conveyor length per minute when the conveyor is loaded with four pieces of cabbage (occupied area: 600 mm x 400 mm) in every 10-sec interval. Hence, the total length of the conveyor required amounts to 48 m in the heat treatment of the kimchi ingredient for 20 minutes. It is therefore preferable to construct the conveyor in the form of a vertical arrangement of multiple stages.

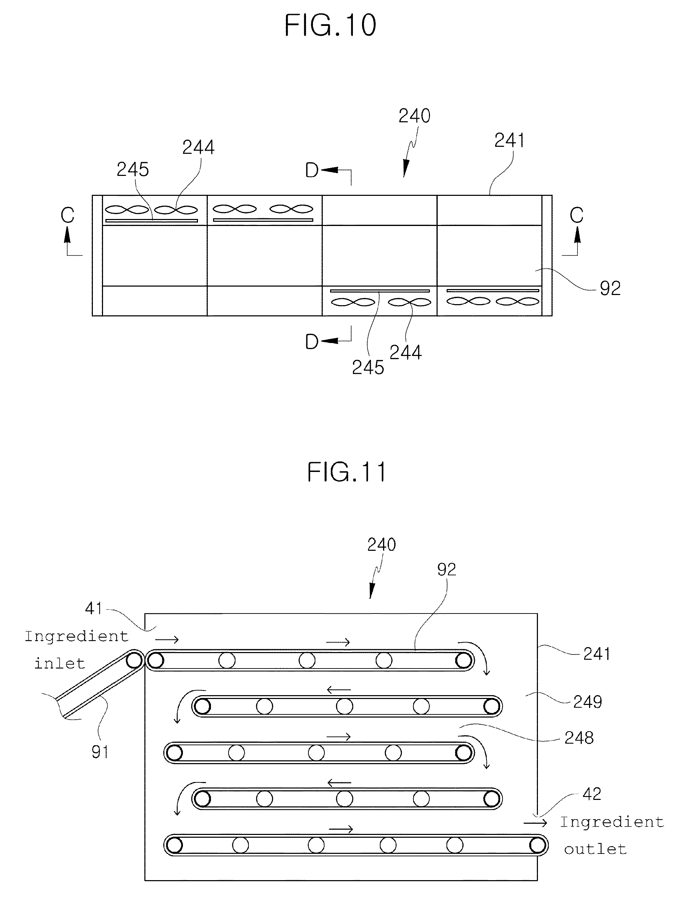

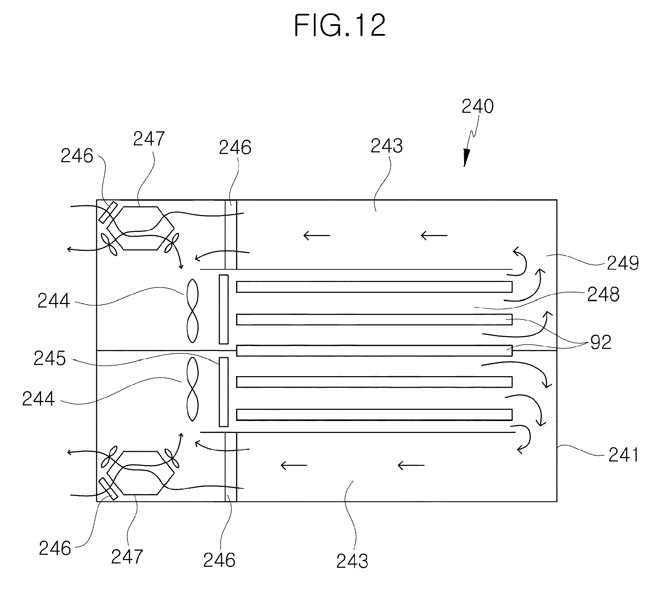

The conveyor hot air blowing device 240 includes, as illustrated in FIGS. 11 and 12, a hot air tunnel 249 provided to surround the top and bottom and both sides of the drying conveyor 92; an air blower 244 for forcing hot air in the horizontal direction of the drying conveyor 92; and a heater 245 for heating up the air supplied to the drying conveyor 92 from the air blower 244.

The heater 245 heats up the introduced external air and the air forcedly circulating towards the drying conveyor 92.

The conveyor hot air blowing device 240 may further include an air filter 246 provided to capture and filter out the foreign materials from the external air introduced by the air blower 244 and the hot air circulated and redrawn by the air blower 244.

Preferably, a circulating passage 243 for the hot air to return by circulation is provided at the top and bottom portions in the hot air tunnel 249. As circumstances require, the circulating passage 243 may be provided at either top or bottom portion in the hot air tunnel 249.

The hot air forced by the air blower 244 passes through a hot air passage 248 provided in the form of a space between the drying conveyors 92 in the hot air tunnel 249, returns through the circulating passage 243 and then gets forced again for use under circulation.

By using the hot air under circulation, it is possible to greatly reduce a consumption of energy in heating the air.

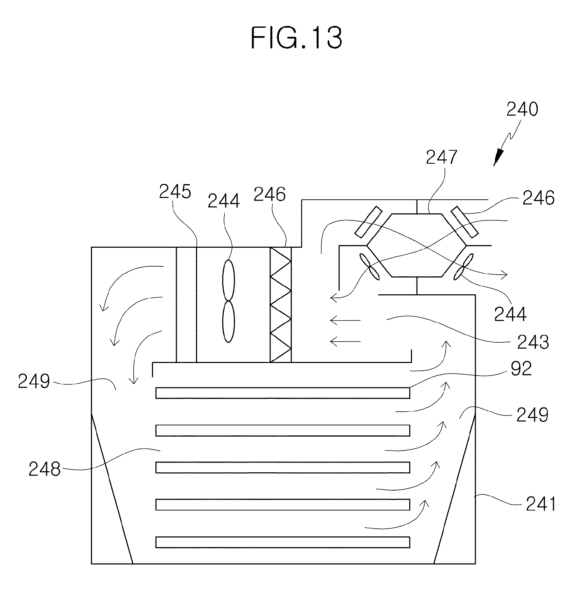

In the conveyor hot air blowing device 240, as shown in FIG. 13, the air blower 244 for forcing hot air towards the drying conveyor 92 may be mounted in the top side of the hot air tunnel 249.

In the conveyor hot air blowing device 240 shown in FIG. 13, the air filter 246 for filtering out the foreign materials from the air circulating through the air blower 244 is provided in the upper stream of the air blower 244, and the heater 245 for heating up the air supplied to the drying conveyor 92 by the air blower 244 is provided on the circulating passage 243 at the top portion of the hot air tunnel 249.

With the conveyor hot air blowing device 240 as constructed above, the air blower 244, the air filter 246 and the heater 245 can be kept from being in direct contact with the steam and rinsing water used to clean the interior of the conveyor hot air blowing device 240. This facilitates the cleaning and maintenance of the conveyor hot air blowing device 240.

The other components of the conveyor hot air blowing device 240 shown in FIG. 13 may be constructed in the same manner as those of the conveyor hot air blowing device 240 of FIG. 12, and detailed description thereof will be omitted in order to avoid redundancy.

The hot air blowing device 40 that comprises the rotary drum hot air blowing device 140 or the conveyor hot air blowing device 240 can dry the kimchi ingredient by heat while circulating hot air so that the temperature of the kimchi ingredient preheated or heated while passing through the microwave heating device 30 is risen or decreased and approximately reaches a given temperature, that is, the temperature of the hot air as evenly as possible.

Therefore, passing the kimchi ingredient through the hot air blowing device 40 reduces the weight of the ingredient reduced by about 5 to 10 % and makes the enzymes, yeasts and microorganisms in the kimchi ingredient inactive.

The hot air blowing device 40 may further include a heat recovery device 247 for recovering the heat for recycling by a heat exchange between a part of the air passing through the drying conveyor 92 and discharged to control the humidity of the hot air and the external air entering the air blower 244.

The drying conveyor 92 that is provided in the form of multiple stages, as shown in FIG. 11, has both ends of the stages arranged in zigzag pattern and operates so that the upper drying conveyor 92 moves in the opposite direction to the lower drying conveyor 92.

When the above-constructed drying conveyor 92 is put into operation, the kimchi ingredient that is loaded on the transfer conveyor 91 and moved from the ingredient outlet of the microwave heating device 30 to the uppermost drying conveyor 92 through the ingredient inlet 41 drops from the end of the uppermost drying conveyor 92 to the top surface of the lower drying conveyor 92 directly underneath the uppermost drying conveyor 92. This procedure is repeatedly performed so that the kimchi ingredient is eventually transported to the ingredient outlet 42 through the lowermost drying conveyor 92.

The kimchi ingredient transported on the multiple stages of the drying conveyor 92 can be dried by heat by getting in contact with the hot air forced by the air blower 244 in the perpendicular direction to the progress direction of the drying conveyor 92.

The hot air passing through the hot air passage 248 operated by the drying conveyor 92 is sucked into the air blower 244 via the circulating passage 243 provided at top and bottom portions of the drying conveyor 92 and then forcedly resent. A part of the recirculating hot air is released to the outside through the heat recovery device 247, and the external air corresponding to this is introduced to receive the exhaust heat through the heat recovery device 247 and supplied to the air blower 244.

In the conveyor hot air blowing device 240, the air supplied to the drying conveyor 92 may be maintained at about 20 to 30 °C to cool down the kimchi ingredient, by controlling the heater 245 in the lower part where the kimchi ingredient is about to be carried out. This can reduce the cooling load of the brine-soaking and cooling device 50 in the following process.

The heating device 20 may include the microwave heating device 30 alone without the hot air blowing device 40. In this case, the microwave heating device 30 is preferably controlled to generate a low microwave power for 5 to 20 minutes and heat up the kimchi ingredient at 35 to 60 °C as evenly as possible.

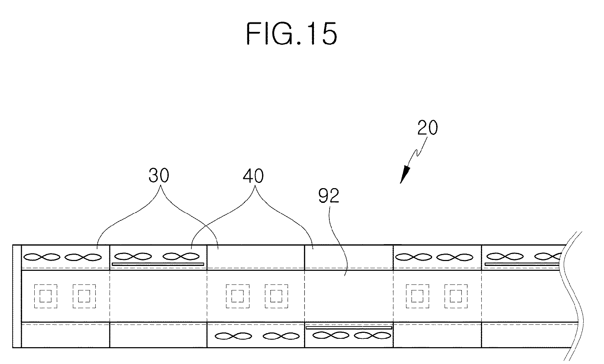

In an alternative way, the heating device 20 may include, as shown in FIG. 15, a combination of the microwave heating device 30 and the hot air blowing device 40 arranged in succession on a single stage of the drying conveyor 92; or a combination of the microwave heating device 30 and the hot air blowing device 40 repeatedly arranged in succession on a single stage of the drying conveyor 92.

In this case, the kimchi ingredient is preferably dried by heat by repeatedly operating the microwave heating device 30 for a short time of 1 to 3 minutes and the hot air blowing device 40 for 5 to 10 minutes to entirely maintain the core temperature of the kimchi ingredient at 35 °C to 60 °C for 10 minutes or longer at the minimum, without causing an overheat on a part of the kimchi ingredient.

The heating device 20 may include the hot air blowing device 40 alone without the microwave heating device 30. In this case, conduction heat as a result of the convention current is used to heat up the kimchi ingredient, taking a long time. It is thus desirable to circulate hot air at high temperature approximating 70 °C, raising the temperature of the ingredient to about 40 °C as long as the tissue of the kimchi ingredient has no damage, and then to circulate hot air at about 50 °C to 60 °C for 1 to 2 hours, thereby drying the kimchi ingredient by heat without overheating up to above 60 °C.

Further, the heating device 20 may include either the rotary drum hot air blowing device 140 or the conveyor hot air blowing device 240; or a combination of the rotary drum hot air blowing device 40 and the conveyor hot air blowing device 240.

When the microwave heating device 30 and the hot air blowing device 40 are used to maintain the core temperature of the kimchi ingredients at about 35 °C to 60 °C and dry the kimchi ingredients by heat, it is possible to prevent a loss of flavors and a deterioration of texture of the main ingredient and to enhance the drying speed. In other words, it prevents the cellular tissue or the like of the kimchi ingredient from being spoiled, deformed, damaged, or destroyed by heat and keeps the effective components contained in the cellular membrane from being released out in company with the evaporation of water.

As the cellular membrane of the kimchi ingredient is not destroyed, the kimchi ingredient is dried out by the release of water alone from the cellular membrane of the tissue, leaving the effective components in the cellular membrane.

In the brine-soaking and cooling device 50, as shown in FIGS. 4, 5 and 9, the kimchi ingredient from the heating device 20 is soaked in a 3 % to 25 % brine maintained at 30 °C or below for 10 to 40 minutes.

In this regard, the soaking time for the kimchi ingredients is preferably determined in consideration of the amount of the ingredients to be rinsed, the temperature and the target salinity of the ingredients, or the like depending on the degree of wilting, that is, softening of the kimchi ingredients.

The brine-soaking and cooling device 50 may include a soaking bath 52 storing brine; and a moving device 54 for moving the brine-soaked kimchi ingredients in the soaking bath.

The moving device 54 is provided on the top of the soaking bath 52 to rotate a plurality of rectangular net-like moving blades, thereby moving the brine-soaked kimchi ingredients towards the ingredient outlet.

In this regard, the soaking time for the kimchi ingredient may be adjusted depending on the rotational speed of the moving device 54. The faster rotation of the moving device 54 leads to the higher moving speed of the kimchi ingredient in the soaking bath 52 to shorten the soaking time of the kimchi ingredient, whereas the slower rotation of the moving device 54 retards the soaking time of the kimchi ingredient.

Outside the soaking bath 52 is provided a high-salinity brine tank storing brine having a high salinity of 20 to 30 %. When the salinity in the soaking bath 52 becomes lower than a predetermined salinity range, the high-salinity brine tank supplies a high-salinity brine to the soaking bath 52 to maintain the salinity of the soaking bath 52 within the predetermined salinity range.

When the salinity in the soaking bath 52 is higher than the predetermined salinity range, tap water free from salt is supplied to the soaking bath 52 to maintain the salinity of the soaking bath 52 within the predetermined salinity range.

For example, the soaking bath 52 may further include a salinity control device 59 for adjusting the salinity to a predetermined salinity level in an automatic manner.

The soaking bath 52 may further include a salinity measurement device for measuring the salinity; and a temperature sensor for measuring the temperature.

With this construction, it is possible to effectively maintain the salinity of the brine stored in the soaking bath 52 within a predetermined salinity range.

A plurality of brine outlets are formed on the inner surface, including both side surfaces and the bottom surface of the soaking bath 52, and a brine feeding device 53 is provided to supply brine in a jet.

As the brine feeding device 53 is used to apply the brine in a jet, the brine is brought into sufficient contact with the kimchi ingredient to drop the temperature of the kimchi ingredient and also drained from the kimchi ingredient with efficiency.

Further, the brine feeding device 53 may include a plurality of air supplying openings on the bottom surface of the soaking bath 52 to bubble air from the bottom of the soaking bath 52.

The soaking bath 52 may be constructed in the form of a double structure so that external air or cold water circulates in the double spaces to cool down the soaking bath 52 in order to maintain the brine of the soaking bath 52 at low temperature of 0 to 30 °C. For example, the soaking bath 52 may be constructed to have ground water circulating in the summer season and external cold air circulating in the winter season inside its double-wall structure.

Outside the soaking bath 52 may be provided an insulating member to keep the soaking bath 52 warm.

As shown in FIG. 4, a separate cooling device 56 may be further provided in order to drop the temperature of the brine in the soaking bath 52.

As shown in FIG. 4, a UV or plasma sterilizing device 58 for sterilization and a filtering device 57 for elimination of foreign materials from the brine may be further provided to have the brine of the soaking bath 52 keep circulating and clean all the time, for the sake of using the brine circulating in the soaking bath 52 with efficiency and reducing the quantity of the waste brine.

The kimchi ingredient passing through the brine-soaking and cooling device 50 has its core temperature maintained at 30 °C or below and a weight loss of about 3 to 7 %.

By brine-soaking and cooling down the kimchi ingredient in the brine-soaking and cooling device 50, it is possible to prevent the tissue of the heated kimchi ingredient from being spoiled due to long-term exposure to high temperature and to make the degree of wilting uniform all over the tissue regions.

In addition, soaking the kimchi ingredient in a brine can achieve an additional reduction of the water content in the kimchi ingredient by having a part of water out of the cells of the kimchi ingredient.

The soaking process for wilting the kimchi ingredient is performed for about 10 to 40 minutes.

In the brine-soaking and cooling device 50, it may be possible to control the target salinity of the kimchi ingredient by regulating the salinity of the brine and the soaking time. But, a salt-free wilting of the kimchi ingredient can be achieved, because almost little salt penetrates into the kimchi ingredient under the soaking time condition of about 40 minutes.

As shown in FIGS. 4, 5 and 9, the rinsing device 60 rinses the kimchi ingredient fed from the brine-soaking and cooling device 50.

The rinsing device 60 includes a rinsing bath 62 storing a rinsing water; and a rinsing water feeding device 64 having outlets on both side surfaces and the bottom surface of the rinsing bath 62 to supply the rinsing water in a jet.

The rinsing water feeding device 64 has a plurality of rinsing water outlets on both side surface of the rinsing bath 62 to spurt the rinsing water to the ingredient outlet; and a plurality of air supplying openings on the bottom surface of the rinsing bath 62 to bubble air from the bottom of the rinsing bath 62 in order to bring the rinsing water into contact with the kimchi ingredient with ease.

The kimchi ingredient entering the rinsing bath 62 is forced to move towards the ingredient outlet by the spurting stream of the rinsing water.

Further, the rinsing device 60 may be constructed to have all or part of the rinsing water pass through a filtering device 67 and a sterilizing device 68 in order to control foreign materials and microorganisms contained in the rinsing water and use the rinsing water with economy.

Between the brine-soaking and cooling device 50 and the rinsing device 60 is provided a cross-linking conveyor 94 for transporting the kimchi ingredient from the soaking bath 52 to the rinsing bath 62.

Preferably, the cross-linking conveyor 94 comprises a stainless net conveyor, a belt conveyor, etc.

When the cross-linking conveyor 94 comprises a belt conveyor, a plurality of protrusions or protruding plates may be formed lengthily in the width direction to effectively lift up the kimchi ingredient.

The rinsing device 60 may include at least two of the rinsing bath 62 arranged in succession. In this case, the cross-linking conveyor 94 may be provided between the rinsing baths 62 to convey the kimchi ingredient.

In the draining device 70, water is drained from the kimchi ingredient fed from the rinsing device 60 after the rinsing process, and the kimchi ingredient is transferred to the seasoning mixing device 80.

The draining device 70 includes, as shown in FIG. 5, a vibratory conveyor 72 for conveying the kimchi ingredient from the rinsing device 60; and an air blowing device 74 for forcing a high-speed air on the top portion of the vibratory conveyor 72.

The vibratory conveyor 72 comprises a net conveyor or the like to effectively drain water from the kimchi ingredient, thereby dropping water from the kimchi ingredient.

The vibratory conveyor 72 gives vibration to the conveyed kimchi ingredient in order to effectively drain water from the kimchi ingredient.

The above-constructed draining device 70 is enabled to drop or drain water from the kimchi ingredient far faster, since the high-speed wind from the air blowing device 74 separates water from the kimchi ingredient being conveyed on the vibratory conveyor 72 and drops the water from the kimchi ingredient.

The draining device 70 may further include, as shown in FIG. 9, a load container 75 for waiting for loading the kimchi ingredient transported on a declined conveyor 95 from the rinsing device 60; and a rotary draining device 76 for receiving the kimchi ingredient dropped from the load container 75 and draining water from the kimchi ingredient by rotation.

At the bottom of the load container 75 is formed an opening and closing member. Upon completion of the draining process of the rotary draining device 76, the opening and closing member is opened to drop the standby kimchi ingredient from the load container 75 into the rotary draining device 76.

Then, the driving motor of the rotary draining device 76 begins to operate and spin the rotary draining device 76 at high speed for 2 to 3 minutes, thereby draining water from the kimchi ingredient by the centrifugal force.

In order to transport the kimchi ingredient completely drained by the rotary draining device 76, there are provided a net conveyor 96, a declined conveyor 97 and a transfer conveyor 98.

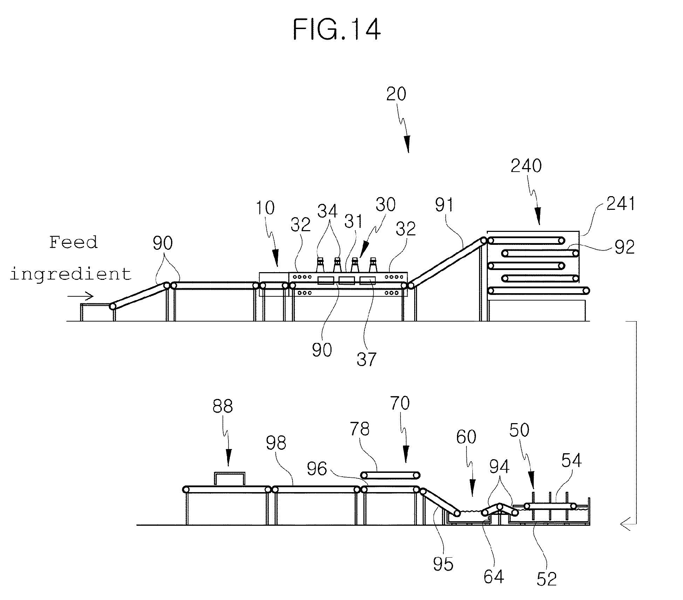

The draining device 70 may further include, as shown in FIG. 14, the net conveyor 96 for conveying the kimchi ingredient from the rinsing device 60; and a compression conveyor 78 being provided on the top of the net conveyor 96 and having a contact portion made of an elastic material, where the contact portion is to be in contact with the kimchi ingredient.

The contact portion of the compression conveyor 78 may be constructed in the form of an air bag and using an elastic material such as a foamed synthetic resin like sponge, etc.

As the contact portion of the compression conveyor 78 to be in contact with the kimchi ingredient is made of an elastic material, an appropriate pressure is put on the kimchi material, thereby minimizing any deformation or damage of the kimchi ingredient.

In this regard, the compression conveyor 78 is moving at the same speed of the net conveyor 96 carrying the kimchi ingredient, pressing the kimchi ingredient towards the net conveyor 96 to let water out of the kimchi ingredient, resulting in a draining action.

During the draining process under pressure, the net conveyor 96 and the compression conveyor 78 may be put on vibration to make the water-draining action easier. In addition, or air may be strongly forced towards the compressed kimchi ingredient to help water drop from the kimchi ingredient.

After the draining device 70, there may be provided, as shown in FIG. 4 and 5, a seasoning mixing device 80 for mixing the drained kimchi ingredient with seasonings to make kimchi; and a packing device 88 for packing the seasoned kimchi, thereby making it possible to perform the seasoning-mixing process and the packing process in succession.

For example, the seasoning mixing device 80 includes, as shown in FIG. 5, a seasoning mixing drum 82 operated to spin; and a screw 85 and an agitating blade 85 for evenly mixing the kimchi ingredient fed into the seasoning mixing drum 82 via the draining device 70 with the seasonings fed from a seasoning feeder and transferring the mixture to the packing device 88.

The seasoning mixing drum 82, the screw 84 and the agitating blade 85 may be constructed in the same manner as the rotary drum 142, the screw 148 and the agitating blade 143, and detailed description thereof will be omitted in order to avoid redundancy.

For example, the screw 84 is provided in the seasoning mixing drum 82 and mounted to be rotatable together with the seasoning mixing drum 82. The agitating blade 85 is mounted on the inner surface of the seasoning mixing drum 82 to protrude towards the center of the seasoning mixing drum 82. The agitating blade 85 may be provided in the form of a dam connecting the adjacent blades of the screw 84 to each other to block the gap between the adjacent blades of the screw 84.

Unlike the rotary drum 142, the seasoning mixing drum 82 does not have a number of holes along the outer circumferential surface. The kimchi ingredient transferred on the vibratory conveyor 72 of the draining device 70 is forced towards the center on the one side surface of the seasoning mixing drum 82.

The packing device 88 is adapted to perform a process of packing the seasoned kimchi.

The packing device 88 may be constructed to operation in an automatic manner.

The components of the packing device 88 may be the same as those of various packing devices available in a general food packing plant, and a detailed description thereof will be omitted in order to avoid redundancy.

The transfer conveyor 98 may be provided to transfer the seasoned kimchi from the seasoning mixing device 80 to the packing device 88.

The draining device 70, the seasoning mixing device 80 and the packing device 88 may be operated in a separate line by manual labor; or they may be isolated from a successive series of production steps and constructed as a separate production step.

The foregoing description has been presented as to the preferred embodiments of the method for quickly salting kimchi ingredients and the quick preparation method and system for low-salt kimchi according to the present invention.

It is however obvious that the present invention is not limited to the preferred embodiments as described above and that many modifications and variations are possible without departing from the scope of the claims, specification and accompanied drawings of the present invention. The scope of the claims of the present invention includes such modifications and variations belonging to the principles of the present invention.

## Claims

1. A method for quickly salting kimchi ingredients,
comprising the step of heating and drying a well-selected and cut kimchi ingredient.

2. The method for quickly salting kimchi ingredients as claimed in claim 1,
wherein the heating and drying step includes exposing the well-selected and cut kimchi ingredient to microwaves to maintain the core temperature of the kimchi ingredient at 35 °C to 60 °C for 10 minutes or longer, thereby drying the kimchi ingredient to be 80 % to 95 % the original weight thereof.

3. The method for quickly salting kimchi ingredients as claimed in claim 1,
wherein the heating and drying step includes applying hot air or infrared light to the well-selected and cut kimchi ingredient to maintain the core temperature of the kimchi ingredient at 35 °C to 60 °C for 10 minutes or longer, thereby drying the kimchi ingredient to be 80 % to 95 % the original weight thereof.

4. The method for quickly salting kimchi ingredients as claimed in claim 1,
wherein the heating and drying step includes exposing the well-selected and cut kimchi ingredient to microwaves and then applying hot air or infrared light to maintain the core temperature of the kimchi ingredient at 35 °C to 60 °C for 10 minutes or longer, thereby drying the kimchi ingredient to be 80 to 95 % the original weight thereof.

5. The method for quickly salting kimchi ingredients as claimed in claim 1, further comprising the step of soaking the dried kimchi ingredient in a 3 % to 25 % brine maintained at 0 °C to 30 °C.

6. A method for quickly preparing low-salt kimchi, comprising:
- heating and drying a well-selected and cut kimchi ingredient to maintain the core temperature of the kimchi ingredient at 35 °C to 60 °C for 10 minutes or longer; and
- mixing the dried kimchi ingredient with a seasoning to prepare kimchi.

7. The method for quickly preparing low-salt kimchi as claimed in claim 6, further comprising:
- soaking the dried kimchi ingredient in a 3 % to 25 % brine maintained at 0°C to 30°C;
- rinsing and draining the brine-soaked kimchi ingredient; and
- mixing the rinsed and drained kimchi ingredient with a seasoning.

8. The method for quickly preparing low-salt kimchi as claimed in claim 6,
wherein the heating step includes drying the kimchi ingredient to be 80 to 95 % of the original weight.

9. The method for quickly preparing low-salt kimchi as claimed in claim 6,
wherein the heating step includes exposing the well-selected and cut kimchi ingredient to microwaves.

10. The method for quickly preparing low-salt kimchi as claimed in claim 6,
wherein the heating step includes applying hot air or infrared light to the well-selected and cut kimchi ingredient.

11. The method for quickly preparing low-salt kimchi as claimed in claim 6,
wherein the heating step includes exposing the well-selected and cut kimchi ingredient to microwaves while forcing external air to the kimchi ingredient, and then applying hot air or infrared light to the kimchi ingredient to maintain the core temperature of the kimchi ingredient at 35 to 60 °C.

12. A system for quickly preparing low-salt kimchi, comprising:
- a heating device for heating up a well-selected and cut kimchi ingredient to increase the core temperature of the kimchi ingredient up to 35 °C to 60 °C and drying the kimchi ingredient to be 80 % to 95 % the original weight thereof;
- a brine-soaking and cooling device for soaking the kimchi ingredient fed from the heating device in a 3 % to 25 % brine maintained at 0 °C to 30 °C; and
- a rinsing device for rinsing the kimchi ingredient fed from the brine-soaking and cooling device.

13. The system for quickly preparing low-salt kimchi as claimed in claim 12,
wherein the brine-soaking and cooling device comprises
- a soaking bath storing the brine; a moving device for moving the brine-soaked kimchi ingredient in the soaking bath; and
- a brine feeding device for supplying the brine in a jet.

14. The system for quickly preparing low-salt kimchi as claimed in claim 12, further comprising:
a cutting-chopping device positioned prior to the heating device to cut the well-selected kimchi ingredient into 2 to 4 pieces and then chopping up.

15. The system for quickly preparing low-salt kimchi as claimed in claim 12,
wherein the heating device comprises a microwave heating device for applying microwaves to the well-selected and cut kimchi ingredient while forcing air to the kimchi ingredient.

16. The system for quickly preparing low-salt kimchi as claimed in claim 12,
wherein the heating device comprises a hot air blowing device for applying hot air to the kimchi ingredient being transported on a conveyor or fed into a porous rotary drum to maintain the core temperature of the kimchi ingredient at 35 °C to 60 °C, and drying the kimchi ingredient for 1 to 2 hours to be 80 % to 95 % the original weight thereof.

17. The system for quickly preparing low-salt kimchi as claimed in claim 16,
- wherein the hot air blowing device comprises a rotary drum hot air blowing device or a conveyor hot air blowing device,
- wherein the rotary drum hot air blowing device comprises: a porous rotary drum being mounted to be rotatable in a case and having a number of pores on the cylindrical surface thereof; a plurality of agitating blades being mounted on the inner surface of the rotary drum and protruding towards the center of the rotary drum; an air blower for forcing hot air towards the rotary drum; and a heater being mounted between the air blower and the rotary drum to heat up the air supplied,
- wherein the conveyor hot air blowing device comprises: a drying conveyor vertically arranged in a case in the form of a plurality of stages and comprising a net conveyor or a perforated plate having a number of holes; a hot air tunnel provided to surround the top and bottom and both sides of the drying conveyor; an air blower for forcing hot air in the horizontal direction of the drying conveyor; and a heater for heating up the air forced to the drying conveyor from the air blower.

18. The system for quickly preparing low-salt kimchi as claimed in claim 17,
wherein the rotary drum hot air blowing device further comprises a screw provided in the rotary drum and fixedly mounted to be rotatable together with the rotary drum.

19. The system for quickly preparing low-salt kimchi as claimed in claim 12,
wherein the heating device comprises a microwave heating device for applying microwaves to the cut and chopped kimchi ingredients for 2 to 20 minutes while forcing air to the kimchi ingredients; and a hot air blowing device for applying hot air to the kimchi ingredients being transported on a conveyor or fed into a porous rotary drum from the microwave heating device to maintain the core temperature of the kimchi ingredients at 35 °C to 60 °C, and drying the kimchi ingredient for 10 to 40 minutes to be 80 to 95 % the original weight thereof.

20. The system for quickly preparing low-salt kimchi as claimed in claim 19,
wherein the heating device comprises the microwave heating device and the hot air blowing device being mounted in succession on a same transfer conveyor.

21. The system for quickly preparing low-salt kimchi as claimed in claim 12,
wherein the rinsing device comprises a rinsing bath storing rinsing water; and a rinsing water feeding device connected to the inner surface of the rinsing bath to supply the rinsing water in a jet.

22. The system for quickly preparing low-salt kimchi as claimed in claim 12, further comprising:
- a draining device for draining water from the kimchi ingredients fed from the rinsing device;
- a seasoning mixing device for mixing a seasoning with the kimchi ingredients drained by the draining device; and
- a packing device for packing the kimchi mixed with the seasoning.

23. The system for quickly preparing low-salt kimchi as claimed in claim 22, wherein the draining device comprises a vibratory conveyor for conveying the kimchi ingredients fed from the rinsing device and vibrating to drop water from the kimchi ingredient, thereby achieving a drain.

24. The system for quickly preparing low-salt kimchi as claimed in claim 22, wherein the seasoning mixing device comprises a seasoning mixing drum being rotatable; and a screw and an agitating blade being fixedly mounted in the seasoning mixing drum for evenly mixing the kimchi ingredient fed into the seasoning mixing drum from the draining device with a seasoning fed from a seasoning feeder and transporting the resultant mixture to the packing device.
